(19) Europäisches Patentamt
European Patent Office
Office européen des brevets

(11) EP 3 139 613 A1

(12) EUROPEAN PATENT APPLICATION

(43) Date of publication:
08.03.2017 Bulletin 2017/10

(51) Int Cl.:
*H04N 19/593* (2014.01)

(21) Application number: 15306367.2

(22) Date of filing: 07.09.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicants:
• UNIVERSITE DE NANTES
44000 Nantes (FR)
• Centre National de la Recherche Scientifique
75016 Paris (FR)

(72) Inventors:
• NASER, Karam
44300 NANTES (FR)
• RICORDEL, Vincent
44390 NORT SUR ERDRE (FR)
• LE CALLET, Patrick
44330 LE PALLET (FR)

(74) Representative: Novagraaf Technologies
12 Place des Halles Saint Louis
56100 Lorient (FR)

(54) **METHOD FOR ENCODING VIDEO FRAMES BASED ON LOCAL TEXTURE SYNTHESIS AND CORRESPONDING DEVICE**

(57)     The present invention relates to a method and a device for encoding a current frame of a video sequence, said current frame being encoded block by block. According to the invention, a current block of the current frame is encoded by performing the following steps:

- applying (S1) a texture synthesis to said video sequence in order to generate a set of n candidate blocks for replacing the current block, said n candidates blocks. being similar to the current block according to a predefined criterion,

- encoding (S3) the candidate blocks in order to generate encoded candidate blocks and computing a coding cost for each encoded candidate block, and

- selecting (S4) as encoded block for the current block the encoded candidate block having the lowest coding cost.

FIG.2

# Description

## 1. Technical Field

The present invention relates generally to the field of video compression and more specifically to a method for encoding video frames based on a local texture synthesis.

## 2. Background Art

Textures are well known component in image/video analysis as they usually cover wide areas in the visual signal. They can be defined as contiguous areas with homogeneous properties (color, orientation, motion) and they can range from simple textures (for example, a DC patch) to more complicated ones such as grass or water.

The human visual system is usually less attentive to textures than to the shapes or objects which they belong to. In terms of similarity, two textures can look visually indistinguishable even if there is a high point by point difference. For these reasons, texture synthesis algorithms can elegantly generate textures from original ones without a noticeable visual distortion.

Texture synthesis has evolved during the last two decades. There are several examples of a successful approaches such as those disclosed in "Graphcut textures: image and video synthesis using graph cuts", V.Kwatra, A.Schödl, I.Essa, G.Turk and A.Bobick, ACM Transactions on Graphics (ToG), vol.22, no.3, 2003, pp.277-286 and in "A parametric texture model based on joint statistics of complex wavelet coefficients", J.Portilla and E.P.Simoncelli, International Journal of Computer Vision, vol.40, no.1, pp.49-70, 2000.

These approaches can synthesize textures on larger areas from a given example. Meanwhile, video coding technology is highly optimized in terms of rate and pixelwise distortion. The latest MPEG encoder, known as HEVC (for High Efficiency Video Coding), provides a significant bitrate reduction as compared to the previous MPEG encoders.

The demand on the video streaming and storage is still increasing. New immersive contents, such as Ultra-HD and High Dynamic Range (HDR) videos, open the door to new video coding schemes that can provide higher compression while maintaining an equivalent visual quality. One of the ways to reduce the bitrate is to exploit the knowledge about the human visual perception. There has been a big effort in the context of perceptual image/video coding. The general idea of perceptual coding is to achieve a better coding efficiency in terms of rate-perceptual quality rather than the classical quality computed by PSNR (for Peak Signal-to-Noise Ratio).

The perceptual optimization of video coding can be implemented at various levels of the encoding/decoding process using different perceptual tools. Textures are interesting candidates for perceptual optimization as they can meet both perceptual and coding requirements. There are several approaches which can efficiently compress some textures by utilizing texture synthesis. These approaches are for example disclosed in "Models for static and dynamic texture synthesis in image and video compression", J.Balle, A.Stojanovic and J.R.Ohm, Selected Topics in Signal Processing, IEEE Journal, vol.5, no.7, pp.1353-1365, 2011 and in "A parametric framework for video compression using region-based texture models" F.Zhang and D.R.Bull, Selected Topics in Signal Processing, IEEE Journal, vol.5, no.7, pp.1378-1392, 2011. The drawbacks of these approaches are that the texture synthesis is not integrated to the video coding process so the compressed video cannot be decoded directly by the existing standard decoder (HEVC) and imply to modify it. In addition, modifying the existing standard would end up with modifying the deployed hardware and/or software and consequently the existing devices and thus negatively impact the user's experience.

## 3. Summary of Invention

The purpose of the invention is to propose a video coding method based on texture synthesis achieving higher bitrate saving while maintaining equivalent visual quality, without a need to modify the existing coding standard.

The present invention relates to a method for encoding a current frame of a video sequence, said current frame being encoded block by block in a raster scan order, wherein a current block of the current frame is encoded by performing the following steps:

-    applying a texture synthesis to said video sequence in order to generate a set of n candidate blocks for replacing the current block, said n candidates blocks being similar to the current block according to a predefined criterion,
-    encoding the candidate blocks in order to generate encoded candidate blocks and computing a coding cost for each encoded candidate block, and
-    selecting as encoded block for the current block the encoded candidate block having the lowest coding cost.

This method, called Local Texture Synthesis (LTS) method, is suitable for coding static and dynamic textures. It bridges the gap between texture synthesis and video coding in the sense that the texture synthesis is done during the encoding process such that the decoder can independently decode the bit stream. It allows achieving higher bitrate saving using texture synthesis without a need to modify the existing coding standard.

In a preferred embodiment, the number n of candidate blocks to be encoded in the encoding step of the method is reduced by applying the following steps:

-    computing, for each candidate block, a matching distance with a context of the current block, and
- removing from the set of candidate blocks the candidate blocks of which the matching distance is lower than a predefined threshold.

The context of a current block designates the set of pixels above and left from this current block in a current frame. In this embodiment, the encoding step is applied to the remaining candidate blocks, the number of which is lower than n.

This method is generic regarding the standard encoding type (HEVC, H.264...) and the texture synthesis (Markov Random Fields model, graph-cut model, parametric model,... ).

In a particular embodiment, the texture synthesis is based on Markov Random Fields (MRF) model. In this embodiment, a candidate block is considered to be similar to the current block if their contexts are similar according to MRF.

In an embodiment, the matching distance, referenced $T_{match}$, is defined by the following relation: $T_{match} = 1.1 \times MC_{min}$ wherein $MC_{min}$ is the minimal matching distance of the candidate blocks.

In an embodiment, the coding cost of a block is based on a rate versus distortion criterion.

The method of the invention can be used for intraframe coding or inter-frame coding. It generates candidate blocks for the current block regardless of the coding scheme.

So the method of the invention can be used for coding Intra-frames (I-frames). In that case, the candidate blocks belong to the current frame.

The method of the invention can also be used for coding P-frames or B-frames (namely inter-frame coding). In that case, the candidate blocks belong to temporal neighboring frames. The candidate blocks belong to both spatial and temporal neighborhoods.

The invention also relates to a device for encoding a current frame of a video sequence, said current frame being encoded block by block, characterized in that, for encoding a current block of the current frame, the device is configured to:

- apply a texture synthesis to said video sequence in order to generate a set of n candidate blocks for replacing the current block, said n candidates blocks being similar to the current block according to a predefined criterion,
- encode the candidate blocks in order to generate encoded candidate blocks and computing a coding cost for each encoded candidate block, and
- select as encoded block for the current block the encoded candidate block having the lowest coding cost.

Advantageously, the device is further configured to reduce the number n of candidate blocks to be encoded by:

- computing, for each candidate block, a matching distance with a context of the current block, and
- removing from the set of candidate blocks the candidate blocks of which the matching distance is lower than a predefined threshold.

## 4. Brief description of the drawings

The invention can be better understood with reference to the following description and drawings, given by way of example and not limiting the scope of protection, and in which:

- Fig.1 is a schematic view of a current frame being encoded;

- Fig.2 is a flow chart of the successive steps of the method according to a preferred embodiment of the invention;

- Fig.3 is a schematic view illustrating the computation of a matching distance;

- Fig.4A and Fig.4B are frames illustrating the results of the encoding/decoding of a first texture $T_1$ by a classical method and by the method according to the invention respectively;

- Fig.5A and Fig.5B are frames illustrating the results of the encoding/decoding of a second texture $T_2$ by a classical method and by the method according to the invention respectively;

- Fig.6A and Fig.6B are frames illustrating the results of the encoding/decoding of a third texture $T_3$ by a classical method and by the method according to the invention respectively; and

- Fig.7A and Fig.7B are frames illustrating the results of the encoding/decoding of a fourth texture $T_4$ by a classical method and by the method according to the invention respectively.

## 5. Description of embodiments

The present invention will be described based on a Markov Random Fields (MRF) based texture synthesis. It should be understood, however, that there is no intent to limit example embodiments to this particular form, but on the contrary, example embodiments are to cover all modifications, equivalents, and alternatives falling within the scope of the claims.

The basic idea behind the present invention is the following: given a texture T, the purpose of the inventive method is to find the best synthesis of it, such that it minimizes its instantaneous coding cost. The inventive method can be understood as a reassembling of the texture elements (known as texels) in a way that they become more encoder friendly, while satisfying some necessary constraints regarding the re-assembling process.

The invention will be described in the framework of the encoding of an I-frame (Intra-coded frame) but of course it can be applied for encoding P-Frames (Predicted frames) or B-Frames (Bidirectional Frames).

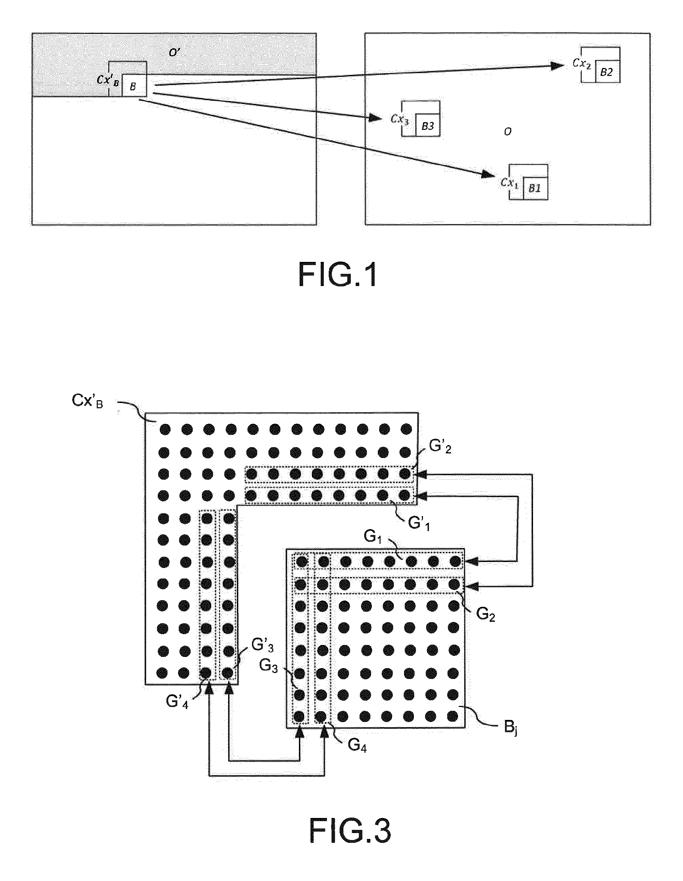

For illustrating the invention, we take the example of a general block based encoder that processes blocks in a raster scan order as illustrated by Fig.1.

In this Figure, we define:

- O designates the original signal or frame (uncompressed frame); it also designates the current frame to be encoded;
- B designates the current block of the frame O to be encoded;
- O' designates the synthetized part of the frame O after application of texture synthesis to blocks of the frame O; the raster indexes of the blocks of O' are lower than the raster index of the current block B;
- Cx and Cx' designate the context of a block in O and O' respectively; more specifically, the block context of a block B designates the set of pixels above and left from this block.

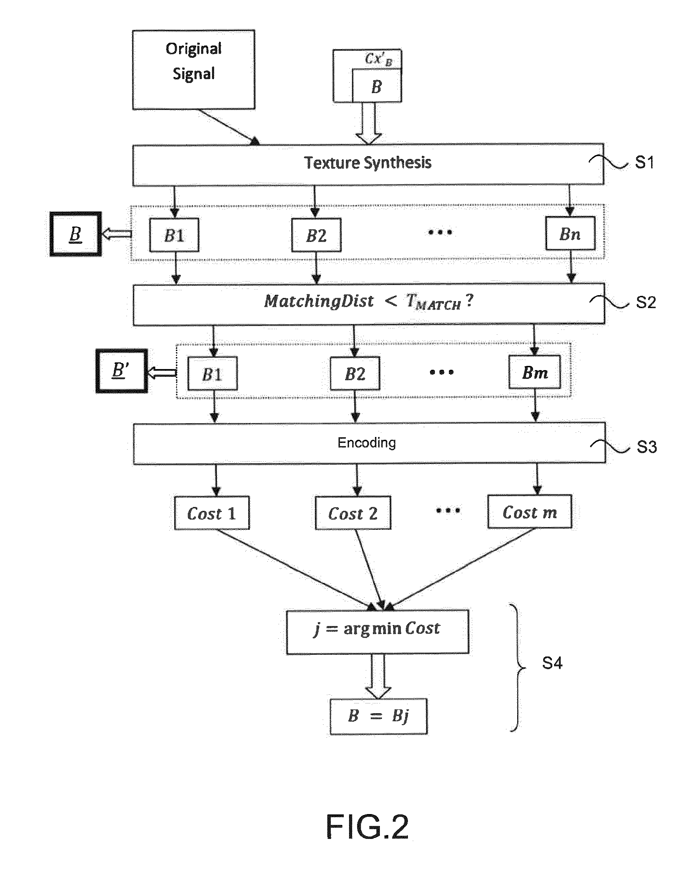

The steps of a preferred embodiment of the method according to the invention are shown in Fig.2.

Step S1

According to a step S1, a texture synthesis is applied to the current frame O in order to generate a set of n candidate blocks for replacing the current block B.

The texture synthesis applied to the current Frame O is for example a Markov Random Fields (MRF) based texture synthesis. For each given block B, it generates from the current frame 0 a plurality of candidate blocks Bi that can be considered as similar to B according to the MRF model. Referring back to Fig. 1, the current block B in 0' has the context of $Cx'_B$. If there exists a set of blocks, called $\underline{B}$, such that their contexts are the same as $Cx'_B$, then, according to the MRF theory, for each $B_i \in \underline{B}$:

$$B_i = \operatorname{argmax} \operatorname{Pr}(B = B_x | Cx'_B) : B_x \in O$$

The blocks $B_i$ having the same context as the current block B are candidate blocks for replacing the current block B in O'.

In practice, it is very rare that to different blocks have exactly the same context. For this reason, it will consider that a context Cx is the same as $Cx'_B$ if the Euclidean distance between these two contexts is lower than a predefined threshold TH, that is

$$\sum_{i,j} \sqrt{[Cx'_B(i,j) - Cx(i,j)]^2} < TH \qquad \text{where}$$

$Cx'_B(i,j)$ and $Cx(i,j)$ are pixels of the contexts $Cx'_B$ and Cx.

$\underline{Cx}$ designates the set of contexts that are the same as the context $Cx'_B$ (all of the contexts of $\underline{Cx}$ have a Euclidean distance to $Cx'_B$ that is lower than the predefined threshold).

Step S2

At the end of the step S1, the set $\underline{B}$ of n candidate blocks has been generated. According to step S2, this number of candidate blocks is reduced in order to lower the number of candidate blocks to be encoded in a subsequent step. This step is recommended but not mandatory. This is also necessary to ensure that the candidate blocks match well with the given context.

In step S2, a matching distance MatchingDist with the current block is computed for each candidate block. This distance is compared to a predefined threshold $T_{Match}$ and the candidate blocks of which the matching distance MatchingDist is lower than the threshold $T_{Match}$ are removed from the set of candidate blocks $\underline{B}$. The new set of candidate blocks, called $\underline{B}'$, comprises m candidate blocks, with $m \leq n$.

For placing a certain block $B_j$ (which is expected to replace the current block) in a given context $Cx'_B$ (context of a current block different from the block $B_j$), the content of the block $B_j$ must be coherent to the content of the current block. A matching distance is computed to ensure for this purpose. The matching distance MatchingDist is defined as the Euclidean distance between the pixels or elements of a predefined area around a given matching line in both horizontal and vertical dimensions of the block $B_j$ and the pixels or elements of a given line in the context $Cx'_B$. The computation of the matching distance is illustrated by Fig.3. Errors between groups of pixels $G_k$ of the block $B_j$ and groups of pixels $G'_k$ of the context $Cx'_B$ are computed in order to compute a mean square error between the block $B_j$ and the context $Cx'_B$. This mean square error is the matching distance MatchingDist of candidate block $B_j$ with a context of the current block $Cx'_B$.

The matching distance MatchingDist is compared to a threshold $T_{Match}$. In a preferred embodiment, this threshold is set depending on input signal in a dynamic manner. The threshold $T_{Match}$ is defined as follows:

$$T_{match} = 1.1 \times MC_{min}$$

wherein $MC_{min}$ is the minimal matching distance of the set $\underline{B}'$ of candidate blocks.

This equation means that, when the matching distance MatchingDist is within 10% of the best matching distance, the next step (encoding step) is applied.

Step S3

In this step, the candidate blocks of the set $\underline{B}'$ are encoded in order to generate encoded candidate blocks. A coding cost is computed for each encoded candidate block.

The coding cost of a block is computed by the encoder and based on a rate versus distortion criterion. The coding cost is defined as follows using a Lagragian formulation:

$$CodingCost(B) = R(B) + \lambda \times D(B)$$

where R(B) and *D(B)* are respectively the rate and the distortion when encoding B, and $\lambda$ is the Lagrangian multiplier.

Step S4

In the step S4, the encoded block selected for the current block B is the encoded candidate block having the lowest coding cost.

The method as presented in Fig.2 can be defined in the form of an algorithm implementing operations. Given a current frame to be encoded 0, it first copies the contents of *O* into *O'*. Then, it works iteratively as follows:

> For each block to be encoded *B* with its context $Cx'_B$ available in *O'*, the algorithm tries synthesizing all possible blocks to replace *B* and thus produces a set $\underline{B}$ of n candidate blocks. A matching distance is used then to retain a subset $\underline{B}'$ from $\underline{B}$ that well matches with the given context $Cx'_B$. Finally, the algorithm encodes each block $B_i$ and selects the one that minimizes the coding cost.

The algorithm can be defined by the following instructions:

```
Data: Current Frame O
Result: Compressed Frame O*
Initialize O' with O
for Every block B in O do
    if exist(Cx'_B) then
        B = SynthesizeTexturePatches (Cx'_B, O)
        for All B_j in B do
            if MatchingDist (B_j, Cx'_B) < T_MATCH
            then
                B = B_j in O'
                Encode(B)
                Costs[j] = CodingCost(B)
            end
        end
        B = B_k in O' | k = argmin Costs(j)
                              j
    end
    B* = Encode(B) in O*
end
```
Algorithm 1: Local Texture Synthesis

The method according to the invention can be employed at different levels in HEVC. For instance, it can be used at the coding tree block (CTB), coding Block (CB) or prediction unit (PB) as defined in *"Overview of the high efficiency video coding (HEVC) standard,"* G. J. Sullivan, J. Ohm, W.-J. Han, and T. Wiegand, Circuits and Systems for Video Technology, IEEE Transactions on, vol. 22, no. 12, pp. 1649-1668, 2012.

The results of the simulations of the present method at the CB level of different textures are given hereinafter. For these simulations, the software HM 16.2 is used as a host encoder. This software is defined in Joint Collaborative Team on Video Coding (JCT-VC)of ITU-T SG 16 WP 3 and ISO/IEC JTC 1/SC 29/WG," High Efficiency Video Coding (HEVC) Test Model 16 (HM 16) Encoder Description, 2014," Tech. Rep.

The textures used in the simulation are obtained from Brodatz album ("USC-SIPI Dataset." [Online]. Available: http://sipi.usc.edu/database/).

Example 1: Encoding of a first texture $T_1$

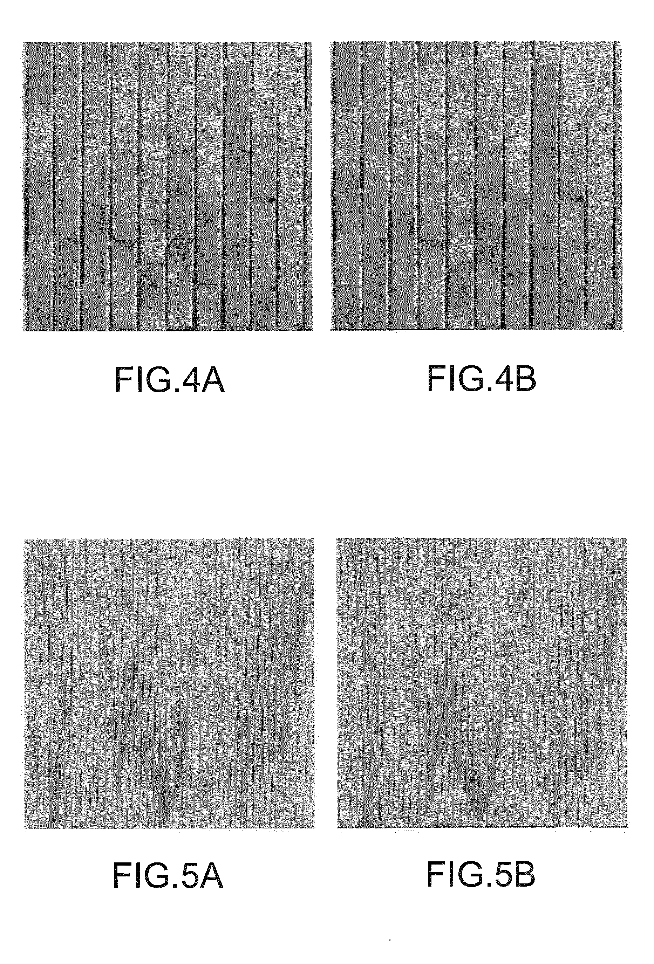

The texture $T_1$ is an image of a brick wall and is considered as a regular texture. Fig.4A shows the results of the encoding/decoding of the texture $T_1$ by a classical encoder/decoder (HEVC) and Fig.4B shows the results of the encoding/decoding of the texture $T_1$ when the texture $T_1$ is encoded according to the method of the invention. In both cases, the texture is encoded (compressed) with a quantization parameter QP equal to 27. The method of the invention saves 9.756% (about 10%) bitrate for this quantization parameter. Visually, the quality of the synthesized texture is fairly well compared to the default HEVC encoder. One can notice that, in Fig.4B, some bricks boundaries are eliminated. This is because encoding a smooth area is generally less expensive than an edge. The encoder thus chooses to replace the block with an edge by a smoother one.

## Example 2: Encoding of a second texture $T_2$

The texture $T_2$ is classified as a directional texture. Fig.5A shows the results of the encoding/decoding of the texture $T_2$ by a classical encoder/encoder (HEVC) and Fig.5B shows the results of the encoding/decoding of the texture $T_2$ when the texture $T_2$ is encoded according to the method of the invention is shown in Fig.4B. In both cases, the texture is encoded (compressed) with a quantization parameter QP equal to 37. The method of the invention saves 6.996% (about 7%) bitrate for this quantization parameter. This texture is more difficult to encode than $T_1$. Although that the texture is re-arranged by the method of the invention, the texture still contains many discontinuities which consume high bitrate. The quality of the decoded texture is equivalent to the default one, but one can notice that some lines look comparatively disconnected.

## Example 3: Encoding of a third texture $T_3$

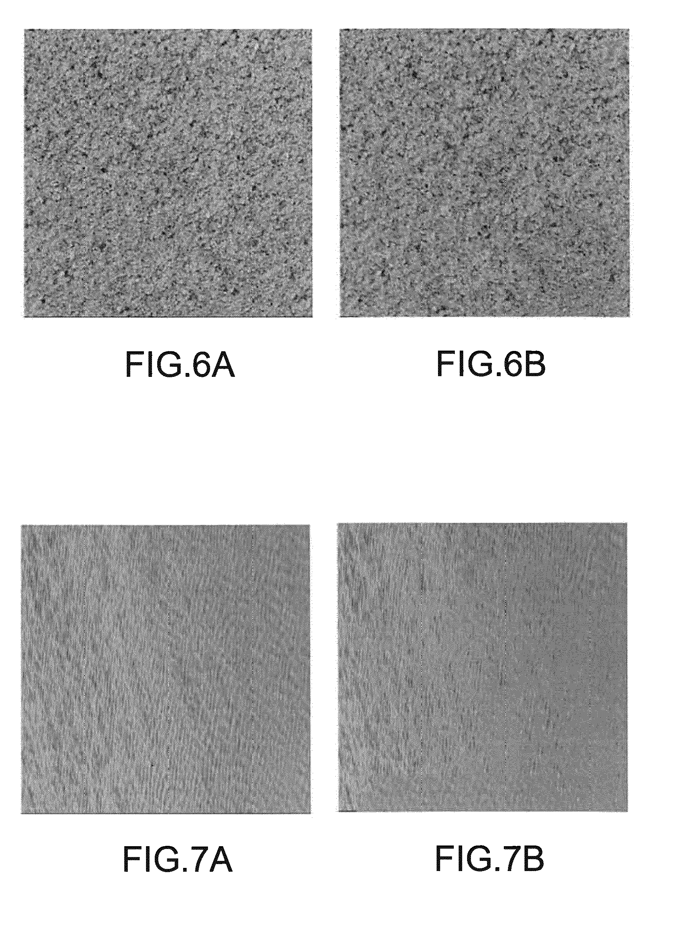

The texture $T_3$ is an irregular one. Fig.6A shows the results of the encoding/decoding of the texture $T_3$ by a classical encoder/decoder (HEVC) and Fig.6B shows the results of the encoding/decoding of the texture $T_3$ when the texture $T_3$ is encoded according to the method of the invention is shown in Fig.5B. In both cases, the texture is encoded (compressed) with a quantization parameter QP equal to 32. The method of the invention saves 3.106% (about 3%) bitrate for this quantization parameter. For this texture, we can notice many point by point differences, but overall, the two textures look visually very similar.

## Example 4: Encoding of a fourth texture $T_4$

The texture $T_4$ differs from the other three in the sense that its coarseness is degrading from left to right. This is an example of a non perfectly homogeneous texture. Fig.7A shows the results of the encoding/decoding of the texture $T_4$ by a classical encoder/decoder (HEVC) and Fig.7B shows the results of the encoding/decoding of the texture $T_4$ when the texture $T_4$ is encoded according to the method of the invention is shown in Fig.6B. In both cases, the texture is encoded (compressed) with a quantization parameter QP equal to 27. The method of the invention saves 4.493% (about 4.5%) bitrate for this quantization parameter.

As can be seen from these examples, the present method provides a simplification of the textures such that they are compressed more efficiently while keeping nearly a similar overall visual quality. These examples show that the method based on MRF was adopted provides a bitrate saving up to 10%. Of course texture synthesis than MRF based texture synthesis can be used, such as a texture synthesis based on graph cut or parametric model.

One big advantage of the present method is that the generated compressed stream is fully compatible with HEVC. This facilitates deploying the algorithm directly to the coding process without a need for modifying the HEVC standard.

The invention has been described in the case where the candidate blocks are searched in the current frame. It is thus adapted for the encoding of I-Frames. But the candidate blocks may also be searched in temporal neighboring frames (next frames or previous frames). The method of the invention can thus also be used for the encoding of P-Frames or B-Frames.

## Claims

1. Method for encoding a current frame of a video sequence, said current frame being encoded block by block, **characterized in that** a current block of the current frame is encoded by performing the following steps:

   - applying (S1) a texture synthesis to said video sequence in order to generate a set of n candidate blocks for replacing the current block, , said n candidates blocks being similar to the current block according to a predefined criterion,
   - encoding (S3) the candidate blocks in order to generate encoded candidate blocks and computing a coding cost for each encoded candidate block, and
   - selecting (S4) as encoded block for the current block the encoded candidate block having the lowest coding cost.

2. Method according to claim 1, wherein the number n of candidate blocks to be encoded is reduced by applying the following steps:

   - computing (S2), for each candidate block, a matching distance with a context of the current block, and
   - removing (S2) from the set of candidate blocks the candidate blocks of which the matching distance is lower than a predefined threshold.

3. Method according to claim 1 or 2, wherein the texture synthesis is based on Markov Random Fields model.

4. Method according to any one of previous claims, **characterized in that** the matching distance, referenced $T_{match}$, is defined by the following relation: $T_{match} = 1.1 \times MC_{min}$ wherein $MC_{min}$ is the minimal matching distance of the candidate blocks.

5. Method according to any one of previous claims, wherein the coding cost of a block is based on a rate versus distortion criterion.

**6.** Method according to any one of previous claims, wherein the candidate blocks belong to the current frame.

**7.** Method according to any one of claims 1 to 5, wherein the candidate blocks belong to neighboring frames.

**8.** Device for encoding a current frame of a video sequence, said current frame being encoded block by block, **characterized in that**, for encoding a current block of the current frame, the device is configured to:

- apply a texture synthesis to said video sequence in order to generate a set of n candidate blocks for replacing the current block,
- encode the candidate blocks in order to generate encoded candidate blocks and computing a coding cost for each encoded candidate block, and
- select as encoded block for the current block the encoded candidate block having the lowest coding cost.

**9.** Device according to claim 8, wherein it is further configured to reduce the number n of candidate blocks to be encoded by:

- computing, for each candidate block, a matching distance with a context of the current block, and
- removing from the set of candidate blocks the candidate blocks of which the matching distance is lower than a predefined threshold.

FIG.1

FIG.3

FIG.2

FIG.4A

FIG.4B

FIG.5A

FIG.5B

FIG.6A

FIG.6B

FIG.7A

FIG.7B

Europäisches
Patentamt

European
Patent Office

Office européen
des brevets

# EUROPEAN SEARCH REPORT

Application Number

EP 15 30 6367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHIEU MOINARD ET AL: "A set of template matching predictors for intra video coding", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 1422-1425, XP031697408, ISBN: 978-1-4244-4295-9 * page 1422 - page 1424; figure 2 * | 1-9 | INV. H04N19/593 |
| X | ADRIANA DUMITRASDUMITRAS ET AL: "A Texture Replacement Method at the Encoder for Bit-Rate Reduction of Compressed Video", IEEE TRANSACTIONS ON CIRCUITS AND SYSTEMS FOR VIDEO TECHNOLOGY, IEEE SERVICE CENTER, PISCATAWAY, NJ, US, vol. 13, no. 2, 1 February 2003 (2003-02-01), XP011071923, ISSN: 1051-8215 * pages 165-170 * | 1,8 | |

TECHNICAL FIELDS
SEARCHED      (IPC)

H04N

The present search report has been drawn up for all claims

| Place of search | Date of completion of the search | Examiner |
|---|---|---|
| Munich | 1 February 2016 | Di Cagno, Gianluca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V.KWATRA ; A.SCHÖDL ; I.ESSA ; G.TURK ; A.BOBICK.** Graphcut textures: image and video synthesis using graph cuts. *ACM Transactions on Graphics (ToG),* 2003, vol. 22 (3), 277-286
- **J.PORTILLA ; E.P.SIMONCELLI.** A parametric texture model based on joint statistics of complex wavelet coefficients. *International Journal of Computer Vision,* 2000, vol. 40 (1), 49-70
- **J.BALLE ; A.STOJANOVIC ; J.R.OHM.** Models for static and dynamic texture synthesis in image and video compression. *Selected Topics in Signal Processing, IEEE Journal,* 2011, vol. 5 (7), 1353-1365

- **F.ZHANG ; D.R.BULL.** A parametric framework for video compression using region-based texture models. *Selected Topics in Signal Processing, IEEE Journal,* 2011, vol. 5 (7), 1378-1392
- **G. J. SULLIVAN ; J. OHM ; W.-J. HAN ; T. WIEGAND.** Overview of the high efficiency video coding (HEVC) standard. *Circuits and Systems for Video Technology, IEEE Transactions on,* 2012, vol. 22 (12), 1649-1668
- High Efficiency Video Coding (HEVC) Test Model 16 (HM 16) Encoder Description. *Joint Collaborative Team on Video Coding (JCT-VC)of ITU-T SG 16 WP 3 and ISO/IEC JTC 1/SC 29/WG,* 2014